(19) Europäisches Patentamt
European Patent Office
Office européen des brevets

(11) EP 3 546 493 A1

(12) EUROPEAN PATENT APPLICATION

(43) Date of publication:
**02.10.2019 Bulletin 2019/40**

(21) Application number: **18164458.4**

(22) Date of filing: **28.03.2018**

(51) Int Cl.:
***C08G 18/48*** (2006.01) ***C08G 18/72*** (2006.01)
***C08G 18/73*** (2006.01) ***C08G 18/75*** (2006.01)
***C08G 18/08*** (2006.01) ***C08G 18/10*** (2006.01)
***C08G 18/12*** (2006.01) ***C08G 18/28*** (2006.01)
***C08G 18/32*** (2006.01) ***C08G 18/40*** (2006.01)
***C08G 18/44*** (2006.01) ***C09D 175/08*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

# (54) AQUEOUS DISPERSION

(57) The invention relates to a polyurethane polymer-based aqueous dispersion and a method for preparing the same, a composition comprising the aqueous dispersion, use of the composition, and a coated article. The aqueous dispersion comprises a polyurethane polymer and water, wherein the polyurethane polymer is obtained by reacting a system comprising the following components: an isocyanate compound comprising a pentamethylene diisocyanate, wherein the amount of the pentamethylene diisocyanate is not less than 25 wt.% based on that the amount of the isocyanate compound is 100 wt.%; a polymer polyol having a number average molecular weight of not less than 400 g/mol, wherein the polymer polyol comprises a carbon dioxide-derived polyether carbonate polyol, the amount of which is not less than 40 wt.% based on that the amount of the polymer polyol is 100 wt.%; an amino compound having an amino functionality of greater than 1; and a compound comprising at least one isocyanate-reactive group and at least one ionic or potentially ionic hydrophilic group.

EP 3 546 493 A1

## Description

### FIELD OF THE INVENTION

The invention relates to a polyurethane polymer-based aqueous dispersion and a method for preparing the same, a composition comprising the aqueous dispersion, use of the composition, and a coated article.

### BACKGROUND ART

In chemical industry, on the one hand, for the sustainable development of energy, it is desirable to replace unsustainable and non-renewable resources (for example, petroleum-derived materials) with sustainable and renewable materials; on the other hand, it is desirable to develop a method for converting carbon dioxide into available new materials so as to improve carbon efficiency and reduce carbon footprint.

As an important raw material in the material industry, polyurethane polymers are widely used in the industries of insulators, foam and the like. An aqueous polyurethane dispersion formed by dispersing a polyurethane polymer in water is widely used in the industries of coatings, sealants, binders, printing inks and the like. Polymer polyols are one of the main raw materials for preparing polyurethane polymers, and presents about 60-90 wt% of all the raw materials. The currently available polymer polyols are mostly prepared from petroleum-derived raw materials. However, in order to save energy on the one hand and utilize carbon dioxide on the other hand, it is desirable in the industry to find a polymer polyol derived from a sustainable and renewable source, especially a carbon dioxide-derived polymer polyol to replace a petroleum-derived polymer polyol.

However, when compared with a petroleum-derived polymer polyol, a polymer polyol derived from a sustainable and renewable source has changed physical and chemical properties, thus a polyurethane polymer prepared therefrom also has changed physical and chemical properties. Accordingly, extensive studies have been conducted in the industry on the preparation of a polyurethane polymer from a polymer polyol derived from a sustainable and renewable source.

WO2011083000A1 discloses a process for preparing a polyester polyol, which comprises the steps of: (a) preparing a reaction mixture comprising the following components: A: at least one carboxylic acid recovered from natural raw materials and having at least two acid groups, particularly sebacic acid recovered from a renewable raw material, B: at least one polyhydric alcohol, C: at least one organic phosphite compound, and D: at least one Lewis acid; (b) heating the reaction mixture to a temperature of at least 160°C and removing the water formed in the course of the reaction; and (c) heating the reaction mixture to a temperature of at least 210°C under a pressure below 1013 mbar for 0.1 to 25 hours.

WO2012/173911A1 discloses a thermoplastic polyurethane comprising the reaction product of a hydroxyl terminated polyester intermediate, a polyisocyanate and a glycol chain extender; wherein the hydroxyl terminated polyester intermediate comprises repeat units that are derived from 1,3-propylene glycol and a dicarboxylic acid, wherein the 1,3-propylene glycol comprises a bio-based 1,3-propylene glycol.

DE102008000478A1 discloses an aqueous polyurethane dispersion, which is prepared by a reaction of a polyether carbonate polyol, carbon dioxide and an alkylene oxide as reaction components in the presence of a multi-metal complex catalyst (a DMC catalyst). When the aqueous polyurethane dispersion prepared from the polyether carbonate polyol is applied to the field of binders, the binders have improved adhesive force and peel strength.

WO2011/163250A1 discloses an aqueous polyurethane dispersion, which is obtained by alternating copolymerization of a polycarbonate polyol, carbon dioxide and an alkylene oxide as reaction components. A film formed from the aqueous polyurethane dispersion is hard and fragile.

In addition, in the fields of coatings, sealants, binders or printing inks, especially those applied to flexible substrates, an aqueous polyurethane dispersion therein is required to have a proper amount of a hard segment to ensure that a coating, a sealant, a binder or a printing ink formed therefrom has good washability and chemical resistance; and a film formed from the aqueous polyurethane dispersion is also required to have high elasticity and softness. However, a currently available aqueous polyurethane dispersion cannot have all of the above properties.

Accordingly, it is desirable to develop an aqueous polyurethane dispersion prepared from a polymer polyol derived from a sustainable and renewable source, especially a carbon dioxide-derived polymer polyol as one of the reaction components, wherein a film formed therefrom not only has good washability and chemical resistance, but also exhibits high elasticity and softness.

### SUMMARY OF THE INVENTION

An object of the invention is to provide an aqueous polyurethane dispersion of a polymer polyol derived from a sustainable and renewable source, especially a carbon dioxide-derived polymer polyol, a composition comprising the aqueous polyurethane dispersion, use of the composition, and a coated article.

The aqueous dispersion according to the invention comprises a polyurethane polymer and water, wherein the polyurethane polymer is obtained by reacting a system comprising the following components:

an isocyanate compound comprising a pentamethylene diisocyanate, wherein the amount of the pentamethylene diisocyanate is not less than 25 wt.% based on that the amount of the isocyanate compound is 100 wt.%;

a polymer polyol having a number average molecular weight of not less than 400 g/mol, wherein the polymer polyol comprises a carbon dioxide-derived polyether carbonate polyol, the amount of which is not less than 40 wt.% based on that the amount of the polymer polyol is 100 wt.%;

an amino compound having an amino functionality of greater than 1;

a compound comprising at least one isocyanate-reactive group and at least one ionic or potentially ionic hydrophilic group;

an optional compound comprising at least one isocyanate-reactive group and at least one non-ionic hydrophilic group;

an optional external emulsifier; and

an optional polyol having a number average molecular weight of 62-399 g/mol.

According to one aspect of the invention, there is provided a method for preparing the aqueous dispersion provided according to the invention, which comprises the steps of:

a. reacting the isocyanate compound, the polymer polyol having a number average molecular weight of not less than 400 g/mol, the optional polyol having a number average molecular weight of 62-399 g/mol, and the optional compound comprising at least one isocyanate-reactive group and at least one non-ionic hydrophilic group to obtain a polyurethane prepolymer;

b. reacting the polyurethane prepolymer, the amino compound having an amino functionality of greater than 1, and the compound comprising at least one isocyanate-reactive group and at least one ionic or potentially ionic hydrophilic group to obtain the polyurethane polymer; and

c. introducing water and the optional external emulsifier before, during or after the step b to obtain the aqueous dispersion.

According to another aspect of the invention, there is provided a composition comprising the aqueous dispersion provided according to the invention.

According to another aspect of the invention, there is provided use of the composition provided according to the invention in the preparation of a coated article by being coated onto a substrate.

According to still another aspect of the invention, there is provided a coated article, which comprises a substrate and a coating formed by coating the composition provided according to the invention onto the substrate.

According to yet another aspect of the invention, there is provided a method for manufacturing a coated article, which comprises coating the composition provided according to the invention onto a substrate.

The polyurethane polymer in the aqueous dispersion of the invention is prepared by reacting a system comprising a pentamethylene diisocyanate and a carbon dioxide-derived polyether carbonate polyol. The polyurethane polymer is suitable for the fields of coatings, binders, sealants or printing inks, etc. The aqueous dispersion of the invention has a proper amount of a hard segment to ensure that a coating, a binder, a sealant or a printing ink comprising the aqueous dispersion has good washability and chemical resistance; and a film formed from the aqueous polyurethane dispersion is particularly suitable for a flexible substrate due to its high elasticity and softness.

## DETAILED DESCRIPTION OF THE INVENTION

The invention provides an aqueous dispersion comprising a polyurethane polymer and water, wherein the polyurethane polymer is obtained by reacting a system comprising the following components:

an isocyanate compound comprising a pentamethylene diisocyanate, wherein the amount of the pentamethylene diisocyanate is not less than 25 wt.% based on that the amount of the isocyanate compound is 100 wt.%;

a polymer polyol having a number average molecular weight of not less than 400 g/mol, wherein the polymer polyol comprises a carbon dioxide-derived polyether carbonate polyol, the amount of which is not less than 40 wt.% based on that the amount of the polymer polyol is 100 wt.%;

an amino compound having an amino functionality of greater than 1;

a compound comprising at least one isocyanate-reactive group and at least one ionic or potentially ionic hydrophilic group;

an optional compound comprising at least one isocyanate-reactive group and at least one non-ionic hydrophilic group;

an optional external emulsifier; and

an optional polyol having a number average molecular weight of 62-399 g/mol.

The invention further provides a composition comprising the aqueous dispersion, use of the composition, and a coated article.

The polyurethane polymer of the invention includes polyurethane urea and/or polyurethane-polyurea and/or polyurea.

The content of the polyurethane polymer of the invention refers to the content of solids free of water or a solvent.

Isocyanate compound

The pentamethylene diisocyanate is preferably biomass-derived.

The amount of the pentamethylene diisocyanate is preferably not less than 30 wt.%, more preferably not less than 45 wt.% and most preferably not less than 80 wt.% based on that the amount of the isocyanate compound is 100 wt.%.

The isocyanate compound may further comprise an isocyanate other than the pentamethylene diisocyanate.

The amount of the isocyanate other than the pentamethylene diisocyanate may be not greater than 60 wt. % based on that the amount of the isocyanate compound is 100 wt. %.

The isocyanate other than the pentamethylene diisocyanate is an isocyanate having an isocyanate group (NCO) functionality of greater than 1, preferably an isocyanate having an isocyanate group functionality of not less than 2.

The isocyanate other than the pentamethylene diisocyanate may be one or more selected from the group consisting of aliphatic isocyanate, cycloaliphatic isocyanate, aromatic-aliphatic isocyanate and aromatic isocyanate; preferably one or more selected from the group consisting of aliphatic isocyanate and cycloaliphatic isocyanate; and most preferably cycloaliphatic isocyanate.

The isocyanate other than the pentamethylene diisocyanate is preferably selected from aliphatic and/or cycloaliphatic isocyanate having an isocyanate group functionality of not less than 2.

The aliphatic isocyanate is preferably one or more selected from the group consisting of: butylene diisocyanate, hexamethylene diisocyanate (HDI), 2,2,4-trimethylhexamethylene diisocyanate, 2,4,4-trimethyl 1,6-hexamethylene diisocyanate and 1,8-diisocyanato-4-(isocyanatomethyl)octane.

The cycloaliphatic isocyanate is preferably one or more selected from the group consisting of: isophorone diisocyanate (IPDI), isomeric bis(4,4'-isocyanatocyclohexyl)methane and 1,4-cyclohexylene diisocyanate, most preferably isophorone diisocyanate.

The aromatic-aliphatic isocyanate is preferably one or more selected from the group consisting of: m-xylylene isocyanate (m-XDI), p-xylylene diisocyanate (p-XDI), m-tetramethylxylylene diisocyanate (m-TMXDI), p-tetramethylxylylene diisocyanate (p-TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, bis(isocyanatomethyl)-2,5-dimethylbenzene, 1,4-bis(isocyanatomethyl)-2,3,5,6-tetramethyl benzene, 1,4-bis(isocyanatomethyl)-5-tributylbenzene, bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(isocyanatomethyl)benzene and 1,4-bis(isocyanatomethyl)naphthalene.

The aromatic isocyanate is preferably one or more selected from the group consisting of: 1,4-diisocyanatobenzene, 2,4-diisocyanato methylbenzene, 2,6-diisocyanato methylbenzene, 1,5-naphthalene diisocyanate, 2,4'-diphenylmethane diisocyanate, 4,4'-diphenylmethane diisocyanate and 4,4',4"-triphenylmethane triisocyanate.

The isocyanate other than the pentamethylene diisocyanate may also be, proportionately, a higher-functional polyisocyanate known per seor a modified polyisocyanate known per se in the field of polyurethane polymer chemistry, for example, a polyisocyanate containing a carbodiimide group, an allophanate group, an isocyanurate group, a urethane group and/or a biuret group.

In addition to the isocyanate compounds, the other components in the system may comprise not greater than 5 wt. % of an isocyanate group, preferably comprise not greater than 3 wt% of an isocyanate group, more preferably comprise not greater than 1 wt. % of an isocyanate group and most preferably comprise no isocyanate group based on that the amount of the various components in the system is 100 wt. %.
The isocyanate other than the pentamethylene diisocyanate is most preferably isophorone diisocyanate.

Polymer polyol having a number average molecular weight of not less than 400 g/mol

Carbon dioxide-derived polyether carbonate polyol

The hydroxyl (OH) functionality of the carbon dioxide-derived polyether carbonate polyol may be greater than 1, preferably not less than 1.5, more preferably 1.9-2.1 and most preferably 2.
The carbon dioxide-derived polyether carbonate polyol is preferably in an amount of not less than 50 wt. % based on that the amount of the polymer polyol is 100 wt. %.
The carbon dioxide-derived polyether carbonate polyol has a number average molecular weight of preferably 400-20000 g/mol, more preferably 500-10000 g/mol and most preferably 1000-2000 g/mol.
The carbon dioxide-derived polyether carbonate polyol is obtained by a reaction of a system comprising the following components in the presence of a catalyst and a metal salt: an H-functional starter, an alkylene oxide and carbon dioxide.
The alkylene oxide may be an alkylene oxide having 2-24 carbon atoms.
The alkylene oxide having 2-24 carbon atoms is preferably one or more selected from the group consisting of: ethylene oxide, propylene oxide, 1-butylene oxide, 2,3-butylene oxide, 2-methyl-1,2-propylene oxide (isobutylene oxide), 1-pentene oxide, 2,3-pentene oxide, 2-methyl-1,2-butylene oxide, 3-methyl-1,2-butylene oxide, 1-hexamethylene oxide, 2,3-hexamethylene oxide, 3,4-hexamethylene oxide, 2-methyl-1,2-pentene oxide, 4-methyl-1,2-pentene oxide, 2-ethyl-1,2-butylene oxide, 1-heptene oxide, 1-octene oxide, 1-nonene oxide, 1-decene oxide, 1-undecene oxide, 1-dodecene oxide, 4-methyl-1,2-pentene oxide, butadiene monoxide, isoprene monoxide, cyclopentene oxide, cyclohexene oxide, cycloheptene oxide, cyclooctene oxide, styrene oxide, methylstyrene oxide, pinene oxide, mono- or polyepoxidized fats as mono-, di- and triglycerides, epoxidized fatty acids, $C_1$-$C_{24}$-esters of epoxidized fatty acids, epichlorohydrin, glycidol, and derivatives of glycidol, such as methyl glycidyl ether, ethyl glycidyl ether, 2-ethylhexyl glycidyl ether, allyl glycidyl ether, glycidyl methacrylate and epoxide-functional alkyloxysilanes, such as 3-glycidyloxy-propyltrimethoxysilane, 3-glycidyloxypropyltriethoxysilane, 3-glycidyloxypropyl-tripropoxysilane, 3-glycidyloxypropyl-methyl-dimethoxysilane, 3-glycidyloxypropyl-ethyldiethoxysilane and 3-glycidyloxypropyltriisopropoxysilane; more preferably ethylene oxide and/or propylene oxide and most preferably propylene oxide.
The H-functional starter may have a functionality of 1-8.
The H-functional starter may be a compound having an H atom for alkoxylation.
Within the scope of the invention, "the functionality of the H-functional starter" shall be understood as the number of active H atoms for alkoxylation per molecule of the starter.
The active group for alkoxylation may be one or more selected from the group consisting of: -OH, $-NH_2$ (primary amine), -NH-(secondary amine), -SH and $-CO_2H$; preferably -OH and/or $-NH_2$; and most preferably -OH.
The mono-functional starter may be one or more selected from the group consisting of: an alcohol, an amine, a thiol and a carboxylic acid.
The alcohol may be one or more selected from the group consisting of: methanol, ethanol, 1-propanol, 2-propanol, 1-butanol, 2-butanol, tert-butanol, 3-buten-1-ol, 3-butyn-1-ol, 2-methyl-3-buten-2-ol, 2-methyl-3-butyn-2-ol, propargyl alcohol, 2-methyl-2-propanol, 1-tert-butoxy-2-propanol, 1-pentanol, 2-pentanol, 3-pentanol, 1-hexanol, 2-hexanol, 3-hexanol, 1-heptanol, 2-heptanol, 3-heptanol, 1-octanol, 2-octanol, 3-octanol, 4-octanol, phenol, 2-hydroxybiphenyl, 3-hydroxybiphenyl, 4-hydroxybiphenyl, 2-hydroxypyridine, 3-hydroxypyridine and 4-hydroxypyridine.
The amine may be one or more selected from the group consisting of: butylamine, tert-butylamine, pentylamine, hexylamine, aniline, aziridine, pyrrolidine, piperidine and morpholine.
The thiol may be one or more selected from the group consisting of: ethanethiol, 1-propanethiol, 2-propanethiol, 1-butanethiol, 3-methyl-1-butanethiol, 2-butene-1-thiol and thiophenol.
The carboxylic acid may be one or more selected from the group consisting of: formic acid, acetic acid, propionic acid, butyric acid, fatty acid, benzoic acid and acrylic acid. The fatty acid may be one or more selected from the group consisting of: stearic acid, palmitic acid, oleic acid, linoleic acid and linolenic acid.
The H-functional starter may be an alcohol having a functionality of 2-6 or a mixture thereof, and preferably one or more selected from the group consisting of: polyhydric alcohols, polybasic amines, polyhydric thiols, amino alcohols, thiols, hydroxy esters, polyether polyols, polyester polyols, polyesterether polyols, polyether carbonate polyols, polycarbonate polyols, polyethyleneimines, polyetheramines, polytetrahydrofurans, polytetrahydrofuranamines, polyether thiols, polyacrylate polyols, castor oil, ricinoleic acid mono- or diglyceride, fatty acid monoglycerides, chemically

modified fatty acid mono-, di- and/or triglycerides, and fatty acid $C_1$-$C_{24}$-alkyl esters comprising on average at least two OH groups per molecule.

The fatty acid $C_1$-$C_{24}$-alkyl esters comprising on average at least two OH groups per molecule may be one or more selected from the group consisting of: Lupranol Balance® (BASF AG), type Merginol (Hobum Oleochemicals GmbH), type Sovermol® (Cognis Deutschland GmbH & Co. KG) and type Soyol®TM (USSC Co.).

The polyol sutitable as the H-functional starter may be one or more selected from the group consisting of: dihydric alcohols, trihydric alcohols, tetrahydric alcohols, alcohols having a hydroxy functionality of greater than 4 and all modified products of the above alcohols with varying amounts of ε-caprolactone, preferably dihydric alcohols and/or trihydric alcohols.

The dihydric alcohol may be one or more selected from the group consisting of: ethylene glycol, diethylene glycol, propylene glycol, dipropylene glycol, 1,3-propanediol, 1,3-butanediol, 1,4-butanediol, 1,4-butenediol, 1,4-butynediol, neopentyl glycol, 1,5-pentanediol, 2-methyl-1,3-propanediol, methylpentanediols such as 3-methyl-1,5-pentanediol, 1,6-hexanediol; 1,8-octanediol, 1,10-decanediol, bis-(hydroxymethyl)-cyclohexanes such as 1,4-bis-(hydroxymethyl)cyclohexane, triethylene glycol, tetraethylene glycol, polyethylene glycols such as polyethylene glycol 400, dipropylene glycol, tripropylene glycol, polypropylene glycol, dibutylene glycol, neopentyl glycol, dodecane-1,12-diol and polybutylene glycol; most preferably one or more selected from the group consisting of: ethylene glycol, propylene glycol, 1,3-propanediol, 1,3-butanediol, 1,4-butanediol, 1,5-pentanediol, 2-methyl-1,3-propanediol, neopentyl glycol, 1,8-octanediol, dodecane-1,12-diol and 1,6-hexanediol.

The trihydric alcohol may be one or more selected from the group consisting of: trimethylolpropane, glycerol, trishydroxyethyl isocyanurate and castor oil.

The tetrahydric alcohol may be pentaerythritol.

The alcohol having a hydroxy functionality of greater than 4 may be one or more selected from the group consisting of: sorbitol, hexitol, sucrose, starch, starch hydrolysates, cellulose, cellulose hydrolysates, and hydroxy-functionalized fats and oils.

The polyether polyols suitable as the H-functional starter may be those having a number average molecular weight of 100-4000 g/mol; preferably polyether polyols composed of repeating ethylene oxide and propylene oxide units, more preferably polyether polyols having a proportion of 35-100 wt. % of propylene oxide units and most preferably polyether polyols having a proportion of 50-100 wt. % of propylene oxide units. The polyether polyols may be random copolymers, gradient copolymers or alternating or block copolymers of ethylene oxide and propylene oxide.

The polyester polyols suitable as the H-functional starter may be those having a number average molecular weight of 200-4500 g/mol, preferably polyester polyols having a hydroxy functionality of not less than 2 and most preferably polyester polyols composed of alternating acid units and alcohol units.

The acid may be one or more selected from the group consisting of: succinic acid, maleic acid, maleic anhydride, adipic acid, phthalic anhydride, phthalic acid, isophthalic acid, terephthalic acid, tetrahydrophthalic acid, tetrahydrophthalic anhydride and hexahydrophthalic anhydride.

The alcohol may be one or more selected from the group consisting of: ethylene glycol, 1,2-propanediol, 1,3-propanediol, 1,4-butanediol, 1,5-pentanediol, neopentyl glycol, 1,6-hexanediol, 1,4-bis-(hydroxymethyl)-cyclohexane, diethylene glycol, dipropylene glycol, trimethylolpropane, glycerol and pentaerythritol.

If dihydric or polyhydric polyether polyols are used as an alcohol component, polyesterether polyols are obtained which may also be used as the H-functional starter.

The dihydric or polyhydric polyether polyols are preferably those having a number average molecular weight of 150-2000 g/mol.

The polycarbonate polyols suitable as the H-functional starter may be polycarbonate diols.

The polycarbonate diols may be those having a number average molecular weight of 150-4500 g/mol, preferably those having a number average molecular weight of 500-2500 g/mol.

The polycarbonate diols may be prepared by reacting phosgene, dimethyl carbonate, diethyl carbonate or diphenyl carbonate with a difunctional alcohol, polyester polyol or polyether polyol.

The catalyst is preferably double metal cyanide.

The double metal cyanide catalyst may be known in the art (see US9260562, EP2287226 andCN10290614).

The method for preparing the carbon dioxide-derived polyether carbonate polyol can be found in CN102869699.

The method for preparing the carbon dioxide-derived polyether carbonate polyol is as follows:

placing a mixture of a double metal cyanide catalyst, a metal salt and at least one H-functional starter into a reactor;

adding a portion of alkylene oxide to the reactor for a first activation, wherein the addition of the alkylene oxide can optionally take place in the presence of $CO_2$;

adding a portion of alkylene oxide to the reactor for a second activation after the temperature peak is reached during

the first activation, wherein the addition of the alkylene oxide can optionally take place in the presence of $CO_2$; and

adding residual alkylene oxide and carbon dioxide to the reactor for copolymerization to obtain the carbon dioxide-derived polyether carbonate polyol.

The copolymerization is preferably carried out under a pressure (absolute pressure) of from 50-110 bar and at a temperature of 50-190°C.
The double metal cyanide catalyst is in an amount of 0.001-0.2 wt. % based on that the amount of the carbon dioxide-derived polyether carbonate polyol is 100 wt.%.
The carbon dioxide is in an amount of 1-40 wt.% based on that the amount of the carbon dioxide-derived polyether carbonate polyol is 100 wt.%.

Polyol other than the carbon dioxide-derived polyether carbonate polyol

The polymer polyol having a number average molecular weight of not less than 400 g/mol may further comprise a polyol other than the carbon dioxide-derived polyether carbonate polyol.
The content of the polyol other than the carbon dioxide-derived polyether carbonate polyol is preferably not greater than 50 wt.% based on that the amount of the polymer polyol having a number average molecular weight of not less than 400 g/mol is 100 wt.%.
The polyol other than the carbon dioxide-derived polyether carbonate polyol is preferably derived from a sustainable and renewable source.
The polyol other than the carbon dioxide-derived polyether carbonate polyol has a number average molecular weight of preferably 400 g/mol-6000 g/mol, more preferably 600-4000 g/mol, further preferably 800-2500 g/mol and most preferably 1000-2000 g/mol.
The polyol other than the carbon dioxide-derived polyether carbonate polyol has a hydroxy functionality of preferably 1.8-4, more preferably 2-3 and most preferably 2.
The polyol other than the carbon dioxide-derived polyether carbonate polyol is preferably one or more selected from the group consisting of: polyether polyol, polycarbonate polyol and polyester polyol, and most preferably polycarbonate polyol and/or polyether polyol.
The polycarbonate polyol and the polyether polyol are each independently in an amount of preferably 15-40 wt.% and most preferably 15-35 wt% based on that the amount of the polymer polyol having a number average molecular weight of not less than 400 g/mol is 100 wt.%.
The polycarbonate polyol is preferably obtained by reaction of a carbonic acid derivative such as diphenyl carbonate, dimethyl carbonate or phosgene with a diol.
The diol may be one or more selected from the group consisting of: ethylene glycol, 1,2-propanediol, 1,3-propanediol, 1,3- butanediol, 1,4-butanediol, 1,6-hexanediol, 1,8-octanediol, neopentyl glycol, 1,4-bishydroxymethylcyclohexane, 2-methyl-1,3-propanediol, 2,2,4-trimethyl-1,3-pentanediol, dipropylene glycol, polypropylene glycol, dibutylene glycol, polybutylene glycol, bisphenol A, tetrabromobisphenol A and lactone-modified diols, most preferably 1,6-hexanediol and/or derivative thereof.
Preferably, the diol comprises not less than 40 wt. % of 1,6-hexanediol and/or hexanediol derivates based on that the amount of the diol is 100 wt%.
The hexanediol derivatives are preferably those having a terminal OH group containing an ether group or ester group, for example, products obtained by reacting 1 mol of hexanediol with at least 1 mol, preferably 1 to 2 mol, of ε-caprolactone, or by etherifying hexanediol with itself to form the di- or trihexylene glycol.
The polycarbonate polyol is more preferably a polycarbonate polyol based on dimethyl carbonate and hexanediol and/or butanediol and/or ε-caprolactone, and most preferably a polycarbonate polyol derived from dimethyl carbonate and hexanediol and/or ε-caprolactone.
The polyether polyol is preferably polytetrahydrofuran glycol polyether. The polytetrahydrofuran glycol polyether may be prepared by polymerization of tetrahydrofuran, see the Examples of DE-A741476 for details.

Amino compound having an amino functionality of greater than 1

The amino compound having an amino functionality of greater than 1 is generally used as a chain terminating agent.
The amino compound having an amino functionality of greater than 1 is preferably an amino compound having an amino functionality of not less than 2, most preferably a diamino compound and/or polyamine.
The reactivity between the diamino compound and/or polyamine and the isocyanate compound is preferably better than that between water and the isocyanate compound.

The diamino compound and/or polyamine is preferably one or more selected from the group consisting of: ethylene diamine, 1,3-propylene diamine, 1,6-hexamethylene diamine, isophorone diamine, 1,3-phenylene diamine, 1,4-phenylene diamine, 4,4'-diaminodiphenylmethane, amino-functional polyethylene oxide or polypropylene oxide such as Jeffamin RTM series from Huntsman, diethylenetriamine, triethylenetetramine and hydrazine, more preferably one or more selected from the group consisting of: isophorone diamine, ethylene diamine and 1,6-hexamethylene diamine, and most preferably isophorone diamine and/or ethylene diamine.

Compound comprising at least one isocyanate-reactive group and at least one ionic or potentially ionic hydrophilic group

The compound comprising at least one isocyanate-reactive group and at least one ionic or potentially ionic hydrophilic group may be one or more selected from the group consisting of: mono- or di-hydroxycarboxylic acids, mono- or di-aminocarboxylic acids, mono- or di-hydroxysulfonic acids, mono- or di-aminosulfonic acids, mono- or di-hydroxyphosphonic acids, mono- or di-aminophosphonic acids, and their salts, is preferably one or more selected from the group consisting of: dimethylolpropionic acid, dimethylolbutyric acid, hydroxypivalic acid, N-(2-aminoethyl)-β-alanine, 2-(2-amino-ethylamino)-ethanesulfonic acid, ethylenediamine-propyl-sulfonic acid or ethylenediamine-butyl-sulfonic acid, 1,2- or 1,3-propylene diamine-β-ethylsulfonic acid, malic acid, citric acid, glycolic acid, lactic acid, glycine, alanine, taurine, lysine, 3,5-diaminobenzoic acid, byproducts of reaction between isophorone diisocyanate and acrylic acid or their alkali or ammonium salts (refer to Example 1 of EP-A 0916647), an adduct of sodium bisulfite with 2-butene-1,4-diol, polyether sulfonate, and a propoxylated adduct of 2-butylene diol with $NaHSO_3$ (refer to DE-A 2446440, pages 5-9, formulae I-III), and a compound capable of forming cations such as N-methyl diethanolamine.

The ionic or potentially ionic hydrophilic group is preferably one or more selected from the group consisting of: carboxylic acid group, carboxylate group, sulphonate group and ammonium group, most preferably carboxylic acid group and/or sulphonate group.

The compound comprising at least one isocyanate-reactive group and at least one ionic or potentially ionic hydrophilic group is more preferably a compound comprising at least two isocyanate-reactive groups and at least one ionic or potentially ionic hydrophilic group, and most preferably one or more selected from the group consisting of: sodium diaminosulphonate, N-(2-aminoethyl)-β-alanine, 2-(2-aminoethylamino)ethanesulfonic acid, byproducts of reaction between isophorone diisocyanate and acrylic acid, and dimethylolpropionic acid.

Optional compound comprising at least one isocyanate-reactive group and at least one non-ionic hydrophilic group

The compound comprising at least one isocyanate-reactive group and at least one non-ionic hydrophilic group is preferably a polyoxyalkylene ether comprising at least one hydroxyl or amino group.

The polyoxyalkylene ether comprising at least one hydroxyl or amino group comprises 30-100 wt. % ethylene oxide-derived units based on that the amount of the polyoxyalkylene ether comprising at least one hydroxyl or amino group is 100 wt. %; more preferably those comprising 1-3 hydroxyl or amino group(s), and further preferably those having a structure of Formula I:

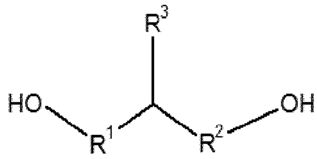

I

wherein:

$R^1$ and $R^2$ are each independently preferably one or more selected from the group consisting of: divalent aliphatic, cycloaliphatic and aromatic groups having 1-18 carbon atoms, the aliphatic, cycloaliphatic or aromatic groups may be interrupted by an oxygen atom and/or a nitrogen atom, and

$R^3$ is preferably an alkoxy-terminated polyoxyethylene group.

The compound having a structure of Formula I is preferably a monofunctional polyalkylene oxide polyether alcohol containing on average 5 to 70, preferably 7 to 55, ethylene oxide units per molecule obtainable by alkoxylation of suitable starter molecules, e.g. those as described in Ullmanns Encyclopädie der technischen Chemie, 4th edition,

Volume 19, Verlag Chemie, Weinheim pp. 31-38.

Suitable starter molecules may be one or more selected from the group consisting of: saturated monoalcohols, unsaturated alcohols, aromatic alcohols, araliphatic alcohols, secondary monoamines and heterocyclic secondary amines.

The saturated monoalcohol may be one or more selected from the group consisting of: methanol, ethanol, n-propanol, isopropanol, n-butanol, isobutanol, sec-butanol, the isomers of pentanol, hexanol, octanol and nonanol, n-decanol, n-dodecanol, n-tetradecanol, n-hexadecanol, n-octadecanol, cyclohexanol, the isomeric methylcyclohexanols or hydroxymethylcyclohexanols, 3-ethyl-3-hydroxymethyloxetane, tetrahydrofurfuryl alcohol and diethylene glycol monoalkyl ethers, more preferably diethylene glycol monoalkyl ethers and most preferably diethylene glycol monobutyl ether.

The unsaturated alcohol may be one or more selected from the group consisting of: allyl alcohol, 1,1-dimethylallyl alcohol or oleyl alcohol.

The aromatic alcohol may be one or more selected from the group consisting of: phenols, isomeric cresols and methoxyphenols.

The araliphatic alcohols may be one or more selected from the group consisting of: benzyl alcohol, anisyl alcohol and cinnamyl alcohol.

The secondary monoamine may be one or more selected from the group consisting of: dimethylamine, diethylamine, dipropylamine, diisopropylamine, dibutylamine, bis-(2-ethylhexyl)amine, N-methyl- and N-ethylcyclohexylamine, and dicyclohexylamine.

The heterocyclic secondary amine may be one or more selected from the group consisting of: morpholine, pyrrolidine, piperidine and IH-pyrazole.

The suitable starter molecules are most preferably saturated monoalcohols.

Alkylene oxides suitable for an alkoxylation reaction are preferably ethylene oxide and propylene oxide, which can be used in any order or else in a mixture in the alkoxylation reaction.

The polyalkylene oxide polyether alcohol is most preferably polyalkylene oxide polyether polyol. The alkylene oxide groups are present in the polyalkylene oxide polyether polyol in an amount of preferably not less than 30 mol% and most preferably not less than 40 mol%.

The polyalkylene oxide polyether polyol is preferably a polyethylene oxide polyether polyol and most preferably a mixed polyalkylene oxide polyether polyol.

The mixed polyalkylene oxide polyether polyol comprises ethylene oxide groups and propylene oxide groups, wherein the ethylene oxide groups are present in the mixed polyalkylene oxide polyether polyol in an amount of preferably not less than 40 mol%.

Optional external emulsifier

The external emulsifier is preferably fatty alcohol polyether.

The fatty alcohol polyether is preferably aliphatic ethylene glycol polyether and/or aliphatic propylene glycol polyether.

Optional polyol having a number average molecular weight of 62-399 g/mol

The polyol having a number average molecular weight of 62-399 g/mol may be one or more selected from the group consisting of: n-butanol, isobutanol, 2-butoxyethylether, 3-hydroxymethylpropane, glycerol, polyether polyol, polyester polyol, polycarbonate polyol, polylactone polyol, polyamide polyol, ethylene glycol, di-, tri- or tetra-ethylene glycol, 1,2-propanediol, di-, tri- or tetra-propanediol, 1,3-propanediol, 1,4-butanediol, 1,3-butanediol, 2,3-butanediol, 1,5-pentanediol, 1,6-hexanediol, 2, 2-dimethyl-1,3-propanediol, 1,4-dihydroxylcyclohexane, 1,4-dihydroxylmethyl cyclohexane, 1,8-octanediol, 1,10-decanediol, 1,12-dodecanediol, and short chain addition products or mixed addition products of ethylene oxide or propylene oxide starting from an aromatic diol.

The aromatic diol may be selected from1,4-, 1,3-, 1,2-dihydroxylbenzene or 2,2-bis-(4-hydroxyphenyl)-propane (bisphenol A).

The content of the various components in the system may be any amount known by those skilled in the art.

Hard segment of polyurethane polymer

The polyurethane polymer may have a hard segment content of 5-25 wt.%, preferably 10-25 wt.%, more preferably 15-25 wt.% and most preferably 20-25 wt.% based on that the amount of the polyurethane polymer is 100 wt.%.

The hard segment of the polyurethane polymer of the invention refers to urea and urethane groups in the polyurethane polymer, and the hard segment content of the polyurethane polymer of the invention is calculated as follows:

Hard segment content of polyurethane polymer = ((molar weight of hydroxyl group in the system + molar weight of NH-R group in the system)*59 g/mol) / mass of polyurethane polymer)*100%

wherein R is H or $CH_2$.

When the polyurethane polymer in the aqueous dispersion comprises the same or similar hard segment content, a film obtained by drying the aqueous dispersion of the invention has an elongation increased by at least 15% and reduced 100% modulus.

The film has a 100% modulus of preferably smaller than 15 MPa, more preferably smaller than 9 MPa and most preferably smaller than 2 MPa, wherein the 100% modulus is tested at 23±2°C and a relative humidity of 50±5% according to DIN53504.

The film has an elongation of preferably not less than 1500%.

The film of the invention is also known as a coating.

The solids content of the aqueous dispersion may be 20-70 wt.%, preferably 30-65 wt.% and particularly preferably 35-60 wt.% based on that the amount of the aqueous dispersion is 100 wt.%.

The particle size of the aqueous dispersion may be not less than 200 nm.

The aqueous dispersion may have a viscosity of not less than 1000 mPa.s and most preferably not less than 1500 mPa.s.

The aqueous dispersion may have a pH value of greater than 7.

<u>A method for preparing an aqueous dispersion</u>

The polyurethane polymer and water may form an aqueous polyurethane dispersion.

The preparation of the aqueous polyurethane dispersion can be carried out in one or more stages in a homogeneous phase system, or partly in a disperse phase in the case of a multistage reaction. When the reaction in step b is fully or partially completed, a dispersing, emulsifying or dissolving step is carried out. Further polyaddition or modification in a disperse phase is then optionally carried out.

All the processes known in the prior art can be used for the preparation of the aqueous polyurethane dispersion according to the invention, such as emulsifier/shear force, acetone, prepolymer mixing, melt emulsification, ketimine and solid spontaneous dispersion processes or derivatives thereof, more preferably the melt emulsificaion or acetone process, most preferably the acetone process. A summary of these methods is found in Methoden der organischen Chemie (Houben-Weyl, Erweitenmgs-und zur4. Auflage, Volume E20, H Bartl and J. Falbe, Stuttgart, New York, Thieme 1987, p.1671-1682).

In the acetone process, typically, all or some of an isocyanate compound, a polymer polyol having a number average molecular weight of not less than 400 g/mol, an optional polyol having a number average molecular weight of 62-399 g/mol and an optional compound comprising at least one isocyanate-reactive group and at least one non-ionic hydrophilic group are firstly introduced for reaction to prepare a polyurethane prepolymer, and these components are optionally diluted with a solvent that is miscible with water but inert towards an isocyanate group, but preferably heated to an elevated temperature, preferably 50-120°C rather than use of a solvent.

The solvent may be one or more selected from the group consisting of: acetone, butanone, ethyl acetate, tetrahydrofuran, dioxane, acetonitrile, dipropylene glycol dimethyl ether and 1-methyl-2-pyrrolidone, preferably acetone and/or butanone.

The solvent can be added not only at the beginning of the preparation, but also may optionally be added in parts later.

A reaction may occur under normal pressure or elevated pressure.

To accelerate the reaction of step a, a catalyst commonly used in the preparation of a polyurethane prepolymer can be used, for example, triethylamine, 1,4--diazabicyclo-[2,2,2]-octane, tin dioctoate or dibutyltin dilaurate, preferably dibutyltin dilaurate.

The catalyst can be placed in a reactor simultaneously with or subsequently to various components.

Any isocyanate compound, the polymer polyol having a number average molecular weight of not less than 400 g/mol, the optional polyol having a number average molecular weight of 62-399 g/mol and the optional compound comprising at least one isocyanate-reactive group and at least one non-ionic hydrophilic group, which are not added at the beginning of the reaction, are then metered and added.

The isocyanate compound, the polymer polyol having a number average molecular weight of not less than 400 g/mol, the optional polyol having a number average molecular weight of 62-399 g/mol and the optional compound comprising at least one isocyanate-reactive group and at least one non-ionic hydrophilic group are partially or completely

(preferably completely) converted into an isocyanate-functional polyurethane prepolymer. The conversion degree of the components in the step a can be obtained by measuring the content of the NCO in the components. To that end, spectroscopic measurement such as infrared or near-infrared spectroscopy, and determination of the refractive index and chemical analysis such as titration can be carried out on the sampled samples.

The polyurethane prepolymer may be in a solid state or a liquid state.

If the resulting polyurethane prepolymer is not dissolved or only partially dissolved, the polyurethane prepolymer will further be dissolved by means of aliphatic ketones such as acetone or 2-butanone.

Any potentially ionic group present in the polyurethane prepolymer is converted into an ionic form by partial or complete reaction with a neutralizer. The neutralization degree may be 50-125 mol%, preferably 70-100 mol%.

The neutralization may also be carried out simultaneously with the dispersion if water for dispersion already comprises the neutralizer.

In the step b, the amino compound having an amino functionality of greater than 1 and the compound comprising at least one isocyanate-reactive group and at least one ionic or potentially ionic hydrophilic group are subjected to partial or full reaction with residual isocyanate groups of the polyurethane prepolymer obtained in the step a for the purpose of chain extension. The degree of chain extension, i.e. the equivalent ratio of the isocyanate-reactive groups of the compound for the chain extension to free isocyanate groups (NCO) of the polyurethane prepolymer may be 40-100 mol%, preferably 50-100 mol%.

The various components in the step b can optionally be used in a water-diluted form or in a solvent-diluted form alone or in combination, and may be added in any order. The content of the water or solvent is preferably 70-95 wt. % based on that the amount of the aqueous polyurethane dispersion is 100 wt. %.

Vigorous shearing such as vigorous stirring may be used in the step c.

The solvent present in the aqueous polyurethane dispersion may be removed by distillation. The solvent may be removed during the step b or the step c.

The residual organic solvent in the aqueous polyurethane dispersion is preferably smaller than 1.0 wt. % based on that the amount of the aqueous polyurethane dispersion is 100 wt. %.

## Composition

The composition may be a coating, a binder, a sealant or a printing ink.

The aqueous dispersion may be used alone or used with an additive known in the art of the coating, adhesive, sealant or printing ink.

The additive may be one or more selected from the group consisting of: co-adhesives, lubricants, emulsifiers, light stabilizers, antioxidants, fillers, anti-settling agents, defoamers, wetting agents, flow modifiers, antistatic agents, film-forming assistants, reactive diluents, plasticizers, neutralizing agents, catalysts, thickeners, pigments, dyes, tackifiers and matting agents.

The light stabilizers may be UV absorbers and/or sterically hindered amines.

The selection and amount of the additive are in principle known to the ordinary skilled in the art, and can be easily determined.

The aqueous dispersion of the invention may also be mixed together with and used in combination with other aqueous or solvent-containing oligomers or polymers, for example, aqueous or solvent-containing polyester, polyurethane, polyurethane-polyacrylate, polyacrylate, polyether, polyester-polyacrylate, alkyd resin, addition polymers, polyamide/imide or polyepoxide. A simple preliminary test must be performed in each case to test the compatibility of such mixture.

The aqueous dispersion of the invention may also be mixed together with and used in combination with other compounds containing functional groups such as carboxyl, hydroxy and/or blocked isocyanate groups.

The coating, binder, sealant or printing ink is processed according to a method known by those skilled in the art.

## Flexible substrate

The substrate is preferably a flexible substrate.

The flexible substrate is preferably one or more selected from the group consisting of rubbers, plastics, papers, paperboards, woods, textiles, metals, alloys, fabrics, fibers such as glass fibers, plastic fibers and graphite fibers, artificial leathers, leathers, inorganic materials, human or animal has and human or animal skins, more preferably one or more selected from the group consisting of flexible plastics, textiles, leathers, artificial leathers, papers, human or animal hairs and human or animal skins, and most preferably selected from textiles.

The coating may be a process known in the art, and is preferably one or more selected from the group consisting of smearing, roller coating, spray coating, dip coating, injecting, printing and knife coating, and most preferably spray coating.

The spray coating may be air-pressure spraying, airless spraying or electrostatic spraying.

Coated article

The coating may be monolayered or multilayered.

The coating has a 100% modulus of preferably smaller than 15 MPa, more preferably smaller than 9 MPa and most preferably smaller than 2 MPa, wherein the 100% modulus is tested at 23±2°C and a relative humidity of 50±5% according to DIN53504.

The coating has an elongation of preferably not less than 1500%.

The substrate is preferably a flexible substrate.

## EXAMPLES

Unless otherwise defined, all technical and scientific terms used herein have the same meaning as commonly understood by those skilled in the art of the invention. When the definition of a term in the present description conflicts with the meaning as commonly understood by those skilled in the art of the invention, the definition described herein shall apply.

Unless otherwise specified, all numerical values expressing amount of ingredients, reaction conditions and the like used in the description and claims are to be understood as being modified by the term "about". Accordingly, unless indicated to the contrary, the numerical values and parameters described herein are approximate values which are varible according to the desired performance obtained as required.

The term "and/or" used herein refers to one or all of the elements mentioned.

The terms "including" and "comprising" used herein respectively cover the case that only the elements mentioned present and the case that other unmentioned elements in addition to the elements mentioned present.

All percentages in the invention refer to weight percentage, unless otherwise specified.

The analysis and measurement in the invention are carried out at 23±2°C, unless otherwise specified.

The solids content of an aqueous dispersion is determined by an HS153 moisture meter from Mettler Toledo according to DIN-EN ISO 3251.

The hydroxyl content is determined according to ASTM D4274.

The amino content is determined according to AFAM 2011-06054.

The content of the isocyanate group (NCO) is determined by volume according to DIN-EN ISO 11909, and the measured data include the free and potentially free NCO content.

The isocyanate functionality is determined by GPC.

The particle size of an aqueous dispersion is determined using laser spectrometry (a Zatasizer Nano ZS 3600 laser particle size analyzer from Malvern Instruments) after dilution with deionized water.

The viscosity of an aqueous dispersion is measured at 23°C using a DV-II+Pro. rotational viscometer from Brookfield Corporation according to DIN 53019.

The pH value of an aqueous dispersion is measured at 23°C using a PB-10 pH meter from Sartorius, Germany.

Raw materials and reagents

Desmophen®RP PU: having a hydroxyl value of 56.8 mg KOH/g, a hydroxyl functionality of 2 and a number average molecular weight of 2000 g/mol, available from Covestro AG, Germany and used as a carbon dioxide-derived polyether carbonate polyol.

Desmophen® PE 170 HN: a polyester polyol prepared from adipic acid, hexanediol and neopentyl glycol, having a hydroxyl value of 66 mg KOH/g, a hydroxyl functionality of 2 and a number average molecular weight of 1700 g/mol, available from Covestro AG, Germany and used as a polyol other than the carbon dioxide-derived polyether carbonate polyol.

PTHF1000: polytetramethyleneether glycol, having a hydroxyl value of 112 mg KOH/g, a hydroxyl functionality of 2 and a number average molecular weight of 1000 g/mol, available from BASF, Germany and used as a polyol other than the carbon dioxide-derived polyether carbonate polyol.

Desmophen®C2200: a polycarbonate polyol of hexanediol and methyl carbonate, having a hydroxyl value of 56 mg KOH/g, a hydroxyl functionality of 2 and a number average molecular weight of 2000 g/mol, available from Covestro AG, Germany and used as a polyol other than the carbon dioxide-derived polyether carbonate polyol.

Desmodur®I: isophorone diisocyanate available from Covestro AG, Germany and used as an isocyanate other than the pentamethylene diisocyanate.

Desmodur®H: 1, 6-hexamethylene diisocyanate available from Covestro AG, Germany.

PDI: pentamethylene diisocyanate available from Covestro AG, Germany and used as an isocyanate compound.

EDA: ethylene diamine available from Aldrich, Germany and used as an amino compound having an amino functionality of greater than 1.
IPDA: isophorone diamine available from Aldrich, Germany and used as an amino compound having an amino functionality of greater than 1.
AAS: sodium diaminosulphonate $NH_2$-$CH_2CH_2$-NH-$CH_2CH_2$-$SO_3Na$ (concentration: 45% in water), available from Covestro AG, Germany and used as a compound comprising at least one isocyanate-reactive group and at least one ionic or potentially ionic hydrophilic group.

LB25: a monofunctional polyether polyol derived from ethylene oxide/propylene oxide, having a number average molecular weight of 2250 g/mol, available from Covestro AG, Germany, and used as a compound comprising at least one isocyanate-reactive group and at least one non-ionic hydrophilic group.

Comparative Example 1

395.0 g of Desmophen®RP PU was heated to 65°C and 60.2 g of HDI was added to obtain a mixture. The mixture was stirred at 100°C until the actual NCO value of the mixture was lower than its theoretical NCO value, thus obtaining a prepolymer. The prepolymer was dissolved with 809.3 g of acetone at 40°C, then a solution of 22.6 g of AAS, 3.5 g of EDA and 87.6 g of water was metered and added, the resulting solution was stirred for 15 min and then dispersed with 603.3 g of water, and the solvent was removed by vacuum distillation to obtain a comparative aqueous polyurethane dispersion. The comparative aqueous polyurethane dispersion had a solids content of 40.6%, a particle size of 152 nm, a viscosity of 603 mPa.s and a pH value of 7.0.

Comparative Example 2

63.5 g of PTHF1000, 121.5 g of Desmophen®C2200, 14.6 g of LB25 and 203.2 g of Desmophen®RP PU were heated to 70°C, and 49.5 g of HDI and 48.1 g of IPDI were added to form a mixture. The mixture was stirred at 115°C until the actual NCO value of the mixture was lower than its theoretical NCO value, thus obtaining a prepolymer. The prepolymer was dissolved with 992.9 g of acetone at 40°C, then a solution of 10.1 g of AAS, 23.2 g of IPDA, 3.6 g of carbohydrazide and 145 g of water was metered and added, the resulting solution was stirred for 15 min and then dispersed with 170.9 g of water, and the solvent was removed by vacuum distillation to obtain a comparative aqueous polyurethane dispersion. The comparative aqueous polyurethane dispersion had a solids content of 60.3%, a particle size of 1129 nm, a viscosity of 719 mPa.s and a pH value of 6.0.

Example 1

345.6 g of Desmophen®RP PU was heated to 65°C and 48.3 g of PDI was added to obtain a mixture. The mixture was stirred at 100°C until the actual NCO value of the mixture was lower than its theoretical NCO value, thus obtaining a prepolymer. The prepolymer was dissolved with 700.3 g of acetone at 40°C, then a solution of 19.8 g of AAS, 6.1 g of EDA and 73.5 g of water was metered and added, the resulting solution was stirred for 15 min and then dispersed with 521.3 g of water, and the solvent was removed by vacuum distillation to obtain an aqueous polyurethane dispersion. The aqueous polyurethane dispersion had a solids content of 39.3%, a particle size of 208 nm, a viscosity of 1652 mPa.s and a pH value of 7.4.

Example 2

63.5 g of PTHF1000, 121.5 g of Desmophen®C2200, 14.6 g of LB25 and 203.2 g of Desmophen®RP PU were heated to 70°C, and 45.4 g of PDI and 48.1 g of IPDI were added to form a mixture. The mixture was stirred at 115°C until the actual NCO value of the mixture was lower than its theoretical NCO value, thus obtaining a prepolymer. The prepolymer was dissolved with 984.8 g of acetone at 40°C, then a solution of 10.1 g of AAS, 23.2 g of IPDA and 36.1 g of a carbohydrazide solution and 145 g of water was metered and added, the resulting solution was stirred for 15 min and then dispersed with 168.2 g of water, and the solvent was removed by vacuum distillation to obtain an aqueous polyurethane dispersion. The aqueous polyurethane dispersion had a solids content of 59.5%, a particle size of 222.8 nm, a viscosity of 6119 mPa.s and a pH value of 7.3.

Performance test

Film formation of aqueous polyurethane dispersion

The aqueous dispersions of Examples 1 and 2 as well as Comparative Examples 1 and 2 were respectively

coated onto substrates to form films, and the performance of the films was tested.

On a film-making equipment which was provided with two polished front and rear rollers spaced at a certain distance, a piece of release paper was placed in front of the rear roller. The distance between the release paper and the front roller was then adjusted with a micrometer.

The aqueous dispersions of the Examples and Comparative Examples were respectively poured on the release paper, and scraped on the release paper by a 500 μm film scraper to obtain wet films. The wet films were placed in an oven at 50°C and baked for 30 min, and then placed in an oven at 150°C and baked for 3 min to obtain dry films having a thickness of 0.11 μm. After natural cooling at normal temperature, the dry films were placed at a temperature of 20±3°C and a humidity of 50±5% for 3 days and then tested. If a multilayer film needed to be coated, coating was performed once again after each layer of the film was dried.

Test method for elongation

The above films were respectively prepared into dumbbell samples according to DIN53504. The 100% modulus and elongation of the samples were tested according to a method in DIN53504.

Table 1: the performance test results of the films formed from the aqueous dispersions of the Examples and Comparative Examples

| Examples/Comparative Examples | Hard segment (wt%) | Elongation (%) | 100% modulus (MPa) | Coefficient of hardness (MPa/wt%) |
|---|---|---|---|---|
| Comparative Example 1 | 15.7 | 2095.68 | 0.96 | 6.1 |
| Comparative Example 2 | 24.3 | 1291.83 | 1.67 | 6.9 |
| Example 1 | 15.6 | 2500.05 | 0.8 | 5.1 |
| Example 2 | 24.0 | 1559.41 | 1.62 | 6.7 |
| Note: coefficient of hardness=100% modulus/hard segment | | | | |

The comparison between Comparative Example 1 and Example 1 shows that, when the aqueous polyurethane dispersions have similar hard segment content, the film formed from the aqueous polyurethane dispersion prepared using PDI has increased elongation (indicating that the film has better elasticity), and has reduced 100% modulus of elasticity and coefficient of hardness (indicating that the film has better softness).

The comparison between Comparative Example 2 and Example 2 shows that, when the aqueous polyurethane dispersions have similar hard segment content, the coating formed from the aqueous polyurethane dispersion prepared using PDI and IPDI as isocyanate compounds has increased elongation (indicating that the film has better elasticity), and has reduced 100% modulus of elasticity and coefficient of hardness (indicating that the film has better softness).

It is apparent to those skilled in the art that the invention is not limited to the foregoing specific details, and the invention may be implemented in other specific forms without departing from the spirit or main characteristics thereof. Accordingly, the above examples should be considered illustrative rather than limiting from any perspective, thus the scope of the invention is indicated by the claims rather than the above description, and any change should be considered belonging to the invention as long as the change belongs to the meaning and scope of the equivalents of the claims.

## Claims

**1.** An aqueous dispersion comprising a polyurethane polymer and water, the polyurethane polymer being obtained by reacting a system comprising the following components:

an isocyanate compound comprising a pentamethylene diisocyanate, wherein the amount of the pentamethylene diisocyanate is not less than 25 wt.%, preferably not less than 30 wt.%, more preferably not less than 45 wt.% and most preferably not less than 80 wt.% based on that the amount of the isocyanate compound is 100 wt.%;
a polymer polyol having a number average molecular weight of not less than 400 g/mol, wherein the polymer polyol comprises a carbon dioxide-derived polyether carbonate polyol, the amount of which is not less than 40 wt.% based on that the amount of the polymer polyol is 100 wt.%;
an amino compound having an amino functionality of greater than 1;
a compound comprising at least one isocyanate-reactive group and at least one ionic or potentially ionic hydrophilic group;
an optional compound comprising at least one isocyanate-reactive group and at least one non-ionic hydrophilic group;
an optional external emulsifier; and
an optional polyol having a number average molecular weight of 62-399 g/mol.

2. The dispersion according to claim 1, **characterized in that** the pentamethylene diisocyanate is biomass-derived.

3. The dispersion according to claim 1 or 2, **characterized in that** the isocyanate compound further comprises an isocyanate other than the pentamethylene diisocyanate, and the content of the isocyanate is not greater than 60 wt.% based on that the amount of the isocyanate compound is 100 wt.%.

4. The dispersion according to claim 3, **characterized in that** the isocyanate other than the pentamethylene diisocyanate is selected from aliphatic and/or cycloaliphatic isocyanate having an isocyanate group functionality of not less than 2, most preferably isophorone diisocyanate.

5. The dispersion according to claim 1, **characterized in that** the carbon dioxide-derived polyether carbonate polyol has a hydroxyl group functionality of greater than 1, preferably not less than 1.5, more preferably 1.9-2.1 and most preferably 2.

6. The dispersion according to claim 1 or 5, **characterized in that** the carbon dioxide-derived polyether carbonate polyol is obtained by a reaction of a system comprising the following components in the presence of a catalyst and a metal salt: an H-functional starter, an alkylene oxide and carbon dioxide.

7. The dispersion according to claim 6, **characterized in that** the catalyst is a double metal cyanide; the H-functional starter has a functionality of 1-8; and the alkylene oxide is selected from those having 2-24 carbon atoms, preferably ethylene oxide and/or propylene oxide and most preferably propylene oxide.

8. The dispersion according to claim 1 or 5, **characterized in that** the carbon dioxide-derived polyether carbonate polyol has a number average molecular weight of 400-20000 g/mol, more preferably 500-10000 g/mol and most preferably 1000-2000 g/mol.

9. The dispersion according to claim 1, **characterized in that** the polymer polyol having a number average molecular weight of not less than 400 g/mol further comprises a polyol other than the carbon dioxide-derived polyether carbonate polyol, the content of which is not greater than 50 wt.% based on that the amount of the polymer polyol is 100 wt.%, wherein the polyol other than the carbon dioxide-derived polyether carbonate polyol is one or more selected from the group consisting of a polyether polyol, a polycarbonate polyol and a polyester polyol, most preferably a polycarbonate polyol and/or a polyether polyol.

10. The dispersion according to claim 1, **characterized in that** the polyurethane polymer has a hard segment content of 5-25 wt.%, preferably 10-25 wt.%, more preferably 15-25 wt.% and most preferably 20-25 wt.% based on that the amount of the polyurethane polymer is 100 wt.%.

11. A method for preparing the aqueous dispersion according to any one of claims 1-10, comprising the steps of:

a. reacting the isocyanate compound, the polymer polyol having a number average molecular weight of not less than 400 g/mol, the optional polyol having a number average molecular weight of 62-399 g/mol, and the optional compound comprising at least one isocyanate-reactive group and at least one non-ionic hydrophilic group to obtain a polyurethane prepolymer;
b. reacting the polyurethane prepolymer, the amino compound having an amino functionality of greater than 1, and the compound comprising at least one isocyanate-reactive group and at least one ionic or potentially ionic hydrophilic group to obtain the polyurethane polymer; and
c. introducing water and the optional external emulsifier before, during or after the step b to obtain the aqueous dispersion.

12. A composition comprising the aqueous dispersion according to any one of claims 1-10.

13. The composition according to claim 12, **characterized in that** the composition is a coating, a binder, a sealant or

a printing ink.

**14.** Use of the composition according to either one of claims 12-13 in the preparation of a coated article by being coated onto a substrate.

**15.** The use according to claim 14, **characterized in that** the substrate is a flexible substrate which is preferably one or more selected from the group consisting of rubbers, plastics, papers, paperboards, woods, textiles, metals, alloys, fabrics, fibers, artificial leathers, leathers, inorganic materials, human or animal hairs and human or animal skins, more preferably one or more selected from the group consisting of flexible plastics, textiles, leathers, artificial leathers, papers, human or animal hairs and human or animal skins, and most preferably selected from textiles.

**16.** A coated article comprising a substrate and a coating formed by coating the composition according to either one of claims 12-13 onto the substrate.

**17.** A method for manufacturing a coated article, comprising coating the composition according to either one of claims 12-13 onto a substrate.

Europäisches Patentamt
European Patent Office
Office européen des brevets

# EUROPEAN SEARCH REPORT

Application Number
EP 18 16 4458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2018/019904 A1 (COVESTRO DEUTSCHLAND AG [DE]) 1 February 2018 (2018-02-01)<br>* page 17; example 2 *<br>----- | 1-17 | INV.<br>C08G18/48<br>C08G18/72<br>C08G18/73<br>C08G18/75<br>C08G18/08<br>C08G18/10<br>C08G18/12<br>C08G18/28<br>C08G18/32<br>C08G18/40<br>C08G18/44<br>C09D175/08 |
| Y,D | DE 10 2008 000478 A1 (BASF SE [DE]) 11 September 2008 (2008-09-11)<br>* page 19, paragraph [0145] - paragraph [0147] *<br>* page 20, paragraph [0165] - page 21, paragraph [0167] *<br>* page 18, paragraph [0144]; example 1 *<br>----- | 1-17 | |
| | | | TECHNICAL FIELDS SEARCHED (IPC) |
| | | | C08G<br>C09D |

The present search report has been drawn up for all claims

1

| Place of search | Date of completion of the search | Examiner |
|---|---|---|
| Munich | 22 August 2018 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 16 4458

This annex lists the patent family members relating to the patent documents cited in the above-mentioned European search report. The members are as contained in the European Patent Office EDP file on
The European Patent Office is in no way liable for these particulars which are merely given for the purpose of information.

22-08-2018

| Patent document cited in search report | Publication date | Patent family member(s) | Publication date |
|---|---|---|---|
| WO 2018019904 A1 | 01-02-2018 | NONE | |
| DE 102008000478 A1 | 11-09-2008 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011083000 A1
- WO 2012173911 A1
- DE 102008000478 A1
- WO 2011163250 A1
- US 9260562 B
- EP 2287226 A
- CN 10290614
- CN 102869699
- DE 41476 A7
- EP 0916647 A
- DE 2446440 A

### Non-patent literature cited in the description

- Ullmanns Encyclopädie der technischen Chemie. Verlag Chemie, Weinheim. vol. 19, 31-38
- **HOUBEN-WEYL ; H BARTL ; J. FALBE ; STUTT-GART.** *Erweitenmgs-und zur4. Auflage,* 1987, vol. E20, 1671-1682